# EUROPEAN PATENT APPLICATION

(11) **EP 4 699 804 A1**
(43) Date of publication of application: **25.02.2026**
(21) Application number: 24195300.9
(22) Date of filing: 20.08.2024
(51) Int. Cl.: B33Y 70/00, C08G 18/22, C08G 18/38, C08G 18/48, C08G 18/76, C08L 75/04

(54) **METHOD FOR PRODUCING THREE-DIMENSIONAL OBJECTS FROM CURABLE COMPOSITIONS**

(71) Applicant: Sika Technology AG, 6340 Baar (CH)
(72) Inventor: LABOUREIX, Gabriel, 8048 Zürich (CH); LIANG, Shuyu, 8048 Zürich (CH); CHOFFAT, Fabien, 8048 Zürich (CH); PAJAK, Karolina, 8048 Zürich (CH); TROUSSET, Léon, 8048 Zürich (CH)
(74) Representative: Sika Patent Attorneys

(57) **Abstract**

A method for producing a three-dimensional object comprising the steps of:
- providing a first component A comprising,
a1) at least one tri- or higher functional polyol PO1 having a number average molecular weight (Mn) in the range of 150 - 15000 g/mol
a2) optionally at least one di- or tri-functional polyol PO2 that is different from the polyol PO1, and
a3) at least one compound T having at least one thiol group,

- providing a second component B comprising:
b1) At least one polyisocyanate PI,
- mixing the first component A and the second component B with each other in a mixer to give a curable polyurethane composition, and
- applying the curable polyurethane composition layer-by-layer using a movable print head of an additive manufacturing device to prepare a shaped body from a cured polyurethane composition,

wherein the curable polyurethane composition further comprises at least one metal catalyst CAT for catalyzing the reaction of hydroxyl groups and isocyanate groups that is able to form thiol complexes, and
wherein the cured polyurethane composition has a density measured using the Method A as defined in ISO 1183-1:2019 standard of not more than 1.0 g/cm³, preferably not more than 0.9 g/cm³.

## Description

### Technical field

The invention relates to a method for producing a three-dimensional objects from curable compositions, particularly from curable polyurethane compositions, using an additive manufacturing process, especially a 3D printing process.

### Background art

Additive manufacturing (AM) techniques are widely used in various industries to create physical prototypes as well as end-use parts. According to ISO 52900 standard, AM is a "process of joining materials to make parts from 3D model data, usually layer upon layer". AM techniques provide an alternative to conventional manufacturing processes, in which, for example, material is molded or subtracted by milling to create a three-dimensional (3D) object.

Generally, in an AM process a 3D article is manufactured using a shapeless material (e.g. liquids, powders, granules, pastes, etc.) and/or a shape-neutral material (e.g. bands, wires, filaments) that is subjected to chemical and/or physical processes (e.g. melting, polymerization, sintering, curing or hardening). The main categories of additive manufacturing technologies include VAT photopolymerization, material extrusion, material jetting, binder jetting, powder bed fusion, direct energy deposition, and sheet lamination techniques. Additive manufacturing is also known as rapid prototyping, on-demand manufacturing, digital fabrication, solid freeform manufacturing, or 3D printing.

In an AM process, the material is deposited, applied or solidified under computer control based on a digital model of the 3D object to be produced, to create 3D object. The digital model of the 3D article can be created, for example, by using a CAD software or a 3D object scanner. The deposition, application and/or consolidation of the material, for example a curable composition, is carried out in particular on the basis of a data model of the object to be generated and in particular layer-by-layer.

Also in the field of construction, additive manufacturing also has been increasingly studied in recent years and large robotic arm- and gantry-systems have been developed to print building parts using aggregate-based curable mineral binder compositions, ceramics, metals, or polymers. In the construction industry, AM enables production of geometrically complex individualized structures with significantly shorter lead times and/or lower production costs compared to traditional manufacturing techniques.

The use of additive manufacturing techniques in the construction sector, especially 3D printing of curable mineral binder compositions, is quickly developing and projects involving this type of technology are becoming more and more ambitious. However, 3D printing of curable mineral binder compositions is based on a rather difficult interplay between the material to be applied and the application device, particularly a 3D printing device. In fact, the physical and chemical properties of curable mineral binder compositions, such as for example concrete mixtures, make the generative production of concrete elements very difficult. In a typical 3D concrete printing (3DCP) process, a dry mortar mixture is first mixed with water and optionally with admixtures, typically containing polymers and additives, such as plasticizers, using a continuous mixing device to provide a homogeneously mixed pumpable mortar composition having a constant quality and properties. The prepared mortar slurry is then pumped through a supply line having a length of several meters to a printing head and applied layer-by-layer to form a three-dimensional object. A 3DCP process may include a further step of mixing the mortar slurry with one or more additives, especially a setting accelerator, directly in the printing head. In these types of "two-component" 3DCP processes the accelerator is mixed with the mortar slurry just before or in the print head to prevent increasing of the viscosity of the slurry in the supply line.

3DCP printing enables production of 3D objects having complex geometries from curable mineral binder compositions but these types of processes are also relatively difficult to implement in practice and require use of high quality (expensive) materials and specialized workforce. A common challenge with 3D printing of curable mineral binder compositions is that unlike polymeric materials, mineral binders, such as cement, are derived from natural sources and their properties are not constant and vary depending on the origin of the raw materials. Consequently, properties of a dry mortar mixture supplied for use in a 3DCP process may differ from batch to batch and the fluctuations in raw materials must be compensated by controlling one or more printing parameters, such as the type and amount of additives, to maintain a constant quality of the mixed composition to be applied with the 3D printer. Furthermore, large objects are typically printed outside, where the printing process is exposed to changing environmental conditions, which also have to be compensated by adjusting of the printing parameters and/or using different types of raw materials. For example, humidity and temperature have a significant effect on the setting speed of a curable mineral binder composition. Consequently, a relatively small change in weather conditions may require rapid adjustment in the printing parameters, particularly in the amount of additives, such as curing accelerators, mixing speed, printing speed and/or layer height to enable high speed printing without interruptions.

Traditional concrete building techniques, such as concrete casting with molds, are generally much less sensitive to variations in environmental conditions and quality of raw materials. For example, typical casting of a concrete body, such as a base slab or façade element for a building, can be conducted almost independently of the environmental conditions as long as the temperature is above 0 °C to keep the water mixed with the mineral binder composition in a liquid state. Furthermore, any change in the quality of raw materials can be fairly easily compensated by using optimized mix designs, which can be determined based on predefined functional relationships between input parameters, for example, type of raw materials, such as cement, aggregates, and fillers, and performance parameters defining the desired properties of the cured product.

However, traditional concreting also requires the use concrete casting molds/formworks, which are typically manually constructed and discarded after use as waste material. In case of wooden formworks, recycling of the materials after use is a significant burden for the construction operator company. Concrete casting molds having complex geometries are also difficult and time consuming to produce using manual fabrication techniques.

Some initiatives have been taken to reduce the amount of waste materials and to provide concrete casting molds that enable preparation of concrete structures with complex geometries using 3D printing techniques. Typically, these approaches have been based on the use of polymeric materials that are easy to apply using an additive manufacturing techniques, such as polylactic acid (polylactides, PLA), acrylonitrile-butadienestyrene (ABS), and polyolefins. One significant disadvantage of these approaches is that the 3D articles produced by 3D printing of these types of polymeric materials have chemically and physically limited properties, especially regarding to their chemical stability, thermal stability, weathering stability and mechanical properties such as elasticity and toughness. Another disadvantage is that the printing materials can only be applied as a melt, which means that substantial amount of heat energy is consumed during the printing process. Furthermore, the printing speed is limited since a subsequent layer can only be applied after the previous layer has fully solidified by cooling.

There has also been some attempts to use chemically curable polymer compositions as printing materials in a 3D printing process with the objective of improving the chemical and physical properties of the prepared 3D objects. The chemical basis for such printing materials is, for instance, RTV-2 silicones, two-component epoxy materials or two-component polyurethanes. Two-component reactive compositions have some advantages when used in 3D printing processes since the highly reactive constituents, such as curing agents and binders, can be provided in separate components and the curing process begins only after mixing of the two components with each other. In theory, an ideal curable material for 3D printing process would cure rapidly and enable printing with high speeds. The applied material should also cure homogeneously without forming gradients in the layers and independently on external curing factors, particularly air humidity.

In practice, providing an optimized chemically curable organic binder material for 3D printing fulfilling having all desired properties has turned out to be very challenging. Fast curing two-component compositions are easy to provide and the cured 3D printed objects also exhibit improved chemical and physical properties compared to those obtained from non-reactive materials. However, the curing reactions of two-component compositions begin immediately after mixing of the components with each other resulting in rapid increase in the viscosity of the material, which complicates controlled output of the material from a print head or could even result in blocking of the print head. Furthermore, a certain dwell time in a mixer is required to provide a homogeneously mixed material.

Consequently, commonly used two-component polyurethane and epoxide compositions have turned out to be unsuitable for use in a 3D printing process. One solution to the above discussed problems related to use of two-component polyurethane compositions in 3D printing is disclosed in a published patent application US 2021/0363366 A1. The proposed solution relates to a method for 3D printing of two-component polyurethane composition comprising a complexed catalyst system based on a combination of a metal catalyst and a compound having at least one thiol group. The suggested method is allegedly suitable for producing shaped bodies having a total height of 1 cm to 50 cm or more, preferably 10 cm to 30 cm.

The size of an object prepared by 3D printing is limited, for example, by the physical properties of the cured material, especially compressive strength, since the lower layers must be able to withstand the total weight of all successive layers. On the other hand, the total weight of the produced 3D object is also limited since a 3D printing of polymeric materials is typically conduced in an off-site location and the prefabricated article is transported to the construction the site for installation. The methods of prior art have turned out to be less suitable for producing large-scale articles, such as concrete casting molds, by 3D printing of curable organic binder compositions.

Thus, there is a need for new and improved method for 3D printing of large-scale objects from curable organic binder compositions, which method overcomes as far as possible the aforementioned disadvantages of prior art.

### Disclosure of the invention

It is an object of the present invention to provide improved solutions for preparing 3D objects from curable compositions with an additive manufacturing process. Particularly, the solution should enable preparation of large-scale 3D objects from curable organic binder compositions using a high speed 3D printing process. Furthermore, the produced 3D objects should have physical and chemical properties that enable their use in industrial applications, especially as concrete casting molds.

Surprisingly, it was found that these objects can be achieved with the method according to independent claim 1.

Specifically, according to the invention, a method for producing a three-dimensional object is provided, the method comprising the steps of:
- providing a first component **A** comprising,
   a1) at least one tri- or higher functional polyol **PO1** having a number average molecular weight (Mₙ) in the range of 150 - 15000 g/mol
   a2) optionally at least one di- or tri-functional polyol **PO2** that is different from the polyol **PO1,** and
   a3) at least one compound **T** having at least one thiol group,
- providing a second component **B** comprising:
   b1) At least one polyisocyanate **PI,**
- mixing the first component **A** and the second component **B** with each other in a mixer to give a curable polyurethane composition, and
- applying the curable polyurethane composition layer-by-layer using a movable print head of an additive manufacturing device to prepare a shaped body from a cured polyurethane composition,
   wherein the curable polyurethane composition further comprises at least one metal catalyst **CAT** for catalyzing the reactions of hydroxyl groups and isocyanate groups and that is able to form thiol complexes with the thiol compound **T,** and
   wherein the cured polyurethane composition has a density measured using the Method A as defined in ISO 1183-1:2019 standard of not more than 1.0 g/cm³, preferably not more than 0.9 g/cm³.

As it turned out, using a two-component curable polyurethane composition comprising a first and second components **A** and **B** and a metal catalyst **CAT** enables production of large three-dimensional objects by an additive manufacturing process using high printing speeds. The three-dimensional object produced by using the method have been found out to be especially suitable for use as concrete casting molds due to the reduced weight and thermal and chemical stability.

Further aspects are described below and are subject of the further independent claims. Particularly preferred embodiments are outlined throughout the description and the dependent claims.

### Ways of carrying out the invention

A first aspect of the present invention is directed to a method for producing a three-dimensional object is provided, the method comprising the steps of:
- providing a first component **A** comprising,
   a1) at least one tri- or higher functional polyol **PO1** having a number average molecular weight (Mₙ) in the range of 150 - 15000 g/mol
   a2) optionally at least one di- or tri-functional polyol **PO2** that is different from the polyol **PO1,** and
   a3) at least one compound **T** having at least one thiol group,
- providing a second component **B** comprising:
   b1) At least one polyisocyanate **PI,**
- mixing the first component **A** and the second component **B** with each other in a mixer to give a curable polyurethane composition, and
- applying the curable polyurethane composition layer-by-layer using a movable print head of an additive manufacturing device to prepare a shaped body from a cured polyurethane composition,
   wherein the curable polyurethane composition further comprises at least one metal catalyst **CAT** for catalyzing the reactions of hydroxyl groups and isocyanate groups and that is able to form thiol complexes with the thiol compound **T,** and
   wherein the cured polyurethane composition has a density measured using the Method A as defined in ISO 1183-1:2019 standard of not more than 1.0 g/cm³, preferably not more than 0.9 g/cm³.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight can be determined by conventional methods, preferably by gel permeation-chromatography (GPC) using polystyrene as standard, styrenedivinylbenzene gel with porosity of 100 Angstrom, 1000 Angstrom and 10000 Angstrom as the column, and depending on the molecule, tetrahydrofurane as a solvent, at a temperature of 35°C or 1,2,4-trichlorobenzene as a solvent, at 160 °C.

Furthermore, the expression "tri- or higher functional" is understood to mean that a compound, for example, a polyol, has an average at least three functional groups, such as hydroxyl or amine groups, per molecule.

In embodiments, the curable polyurethane composition further comprises at least one light-weight filler **LF.** The term "light-weight filler" refers in the present disclosure to powder materials having low density, such as an apparent (skeletal) density of not more than 1.0 g/cm³, particularly not more than 0.9 g/cm³.

Generally, the density of powder materials can be determined based on different definitions for the volume occupied by the particles of the material. A "true density" refers to the ratio of the mass and the "true volume" of a sample, excluding the volume of the open pores, closed pores, and the inter-particle voids. An "apparent density", also known as "skeletal density", is calculated based on the skeletal volume of the particles, excluding both the open pores and inter-particle voids. A "bulk density" of a powder material is calculated as the mass of the particles per unit volume after the particles have freely filled a standard container under specific conditions thus including the closed pores, open pores, and inter-particle voids. True density and apparent density can be measured using both gas and liquid displacement methods. In a gas displacement method, typically helium, gas is employed instead of liquid to measure the sample volume.

Suitable light-weight fillers for use in the curable polyurethane composition include, particularly, microspheres, especially hollow microspheres such as those based on glass, ceramic, or plastic materials. Further suitable light-weight fillers include, for example, spheres, granules, and beads based on expanded glass, polystyrene, expanded perlite, expanded volcanic ash, expanded vermiculite, pumice, and scoria as well as cenospheres.

The term "cenospheres" refers in the present disclosure to a lightweight, inert, hollow spheres made largely of silica oxide and alumina oxide and filled with air or inert gas. Cenospheres are typically produced as a coal combustion byproduct at thermal power plants.

Suitable light-weight fillers are commercially available, for example, from 3M under the trade name of 3M^{®} Glass Bubbles (hollow glass spheres); from AkzoNobel under the trade name of Expancel^{®} (expanded thermoplastic spheres); from Omya under the trade name of FILLITE^{®} (cenospheres); from Trelleborg under the trade name of ECCOSPHERES^{®} (hollow glass spheres), from Potters Industries Inc under the trade name of Q-CEL^{®} or SPHERICEL^{®}.

In the context of the present disclosure, the terms "sphere", "bead", and "granule" are used without reference to the geometrical shape of the filler. Consequently, a "hollow glass sphere" does not necessarily have a shape of a symmetrical sphere and a "granule" can be provided in form of a sphere.

In embodiments, the light-weight filler **LF** has an apparent density determined by gas displacement pycnometer according to ISO 12154:2014 standard of not more than 0.6 g/cm³, preferably not more than 0.5 g/cm³, more preferably not more than 0.45 g/cm³, even more preferably not more than 0.4 g/cm³, still more preferably not more than 0.35 g/cm³.

The use of such light-weight fillers **LF** has surprisingly been found to enable reducing the density of the cured polyurethane composition without having a significant negative impact on important material properties, especially thermal and chemical stability, elasticity, and toughness of the cured composition. Consequently, the suggested method enables production of large-scale 3D objects by additive manufacturing having a reduced weight compared 3D printed objects of prior art. Such 3D objects can be provided as prefabricated articles and easily transported to a construction site using conventional transportation means.

In embodiments, the light-weight filler **LF** is in form of finely divided particles, such as having a median particle size d₅₀ of not more than 500 µm, preferably not more than 250 µm, more preferably not more than 150 µm, even more preferably not more than 100 µm.

The term "median particle size d₅₀" refers in the present disclosure to a particle size below which 50 % of all particles by volume are smaller than the d₅₀ value. The particle size distribution may be measured, for example, by a laser diffraction method according to ISO 13320:2009 standard, particularly, using a dry dispersion method, where the particles are dispersed in air.

In exemplary embodiments, the light-weight filler **LF** has a median particle size d₅₀ measured according to ISO 13320:2009 standard of 1 - 500 µm, preferably 5 - 250 µm, more preferably 5 - 150 µm, even more preferably 10 - 100 µm, still more preferably 10 - 75 µm.

Particularly, the light-weight filler **LF** may be selected from hollow glass spheres, expanded glass spheres, hollow ceramic spheres, cenospheres, and hollow alumina beads, especially from hollow glass spheres, expanded glass spheres, and cenospheres.

The proportion of the light weight filler **LF** preferably makes up at least 0.5 wt.-%, particularly at least 1.5 wt.-% of the total weight of the curable polyurethane composition.

In embodiments, the curable polyurethane composition comprises 1.5 - 25 wt.-%, preferably 5-20 wt.-%, more preferably 7.5 - 20 wt.-%, even more preferably 10 - 20 wt.- % of the light weight filler **LF.**

The shaped body prepared from the cured polyurethane composition can have almost any desired shape and it may have a solid form or a hollow form, with or without a base.

The total height of the shaped body, particularly the sum of the thicknesses of all individual layers of the shaped body may be at least 50 cm, particularly at least 75 cm, especially at least 100 cm.

In embodiments, the shaped body is a hollow object having an inner and an outer surface and a wall thickness defined between the inner and outer surfaces of, for example, at least 1 mm, particularly at least 2 mm, especially at least 3 mm.

In exemplary embodiments, the shaped body is a hollow object having a wall thickness of 1 - 50 mm, preferably 2-40 mm, more preferably 3 - 35 mm and/or a total height of at least 50 cm, preferably at least 75 cm, more preferable at least 100 cm.

The shaped body can be used as the 3D object or it can be subjected to further processing steps, such as to one or more mechanical or chemical treatment steps, for example, to change the surface properties of the shaped body.

Such aftertreatment(s) may be especially preferred if the method is used for providing 3D objects with desired surface properties, for example, objects having a low surface roughness, such as concrete casting molds having smooth inner surface to enable easy separation of the mold from the cured concrete body.

In embodiments, the method for producing a 3D object comprises a further step of subjecting at least a portion of a surface of the shaped body to a mechanical treatment step to reduce surface roughness.

In further embodiments, the shaped body is a hollow object, particularly having a wall thickness of 1 - 50 mm, preferably 2-40 mm, more preferably 3 - 35 mm and/or a total height of at least 50 cm, preferably at least 75 cm, more preferable at least 100 cm, wherein the method for producing a 3D object comprises a further step of subjecting at least a portion of the inner surface of the hollow object to a mechanical treatment step to reduce surface roughness.

The mechanical treatment step can be conducted, for example, by using at least one of grinding, brushing, abrasive blasting, milling, threading, sawing, cutting, water jet or laser treatment means, particularly by using at least one of grinding, brushing, abrasive blasting, milling, threading, sawing or cutting means.

In embodiments, the 3D object producing by using the method is a concrete casting mold.

The curable polyurethane composition, which is applied by using a movable print head, is obtained by mixing of the first component **A** comprising the at least one polyol **PO1** with the component **B** comprising the at least one polyisocyanate **PI** in a mixer.

In embodiments, the molar ratio of all isocyanate groups in the second component **B** to all isocyanate reactive groups in the first component **A** is in the range of 0.8 - 1.5, preferably 0.9 - 1.3, more preferably 0.9 - 1.2.

Suitable polyols **PO** for use in the curable polyurethane composition include, for example, polyester polyols, polyether polyols, polycarbonate polyols, and poly(tetramethylene ether)glycol.

Particularly suitable polyester polyols include, liquid, amorphous, partially crystalline, and crystalline polyester polyols. These can be obtained from by reacting dihydric and trihydric, preferably dihydric, alcohols, for example, 1,2-ethanediol, diethylene glycol, triethylene glycol, 1,2-propanediol, 1,3-propanediol, dipropylene glycol, 1,4-butanediol, 1,5-pentanediol, 1,6-hexanediol, 1,8-octanediol, 1,10-decanediol, 1,12-dodecanediol, dimer fatty alcohol, neopentyl glycol, glycerol, 1,1,1-trimethylolpropane or mixtures of the aforesaid alcohols, with organic dicarboxylic acids or tricarboxylic acids, preferably dicarboxylic acids, or their anhydrides or esters, such as succinic acid, glutaric acid, 3,3-dimethylglutaric acid, adipic acid, suberic acid, sebacic acid, undecanedioic acid, dodecanedicarboxylic acid, azelaic acid, maleic acid, fumaric acid, phthalic acid, dimer fatty acid, isophthalic acid, terephthalic acid, and hexahydrophthalic acid, or mixtures of the aforesaid acids, and also polyester polyols made from lactones such as from ε-caprolactone, for example, also known as polycaprolactones.

Preferred polyester polyols may include those obtained by reacting adipic acid, sebacic acid or dodecanedicarboxylic acid as dicarboxylic acid and hexanediol or neopentyl glycol as dihydric alcohol. Further examples of suitable polyester polyols include polyester polyols of oleochemical origin. Polyester polyols of this type may be prepared, for example, by complete ring opening of epoxidized triglycerides of a fat mixture comprising at least partially olefinically unsaturated fatty acids, with one or more alcohols having 1-12 carbon atoms, and by subsequent partial transesterification of the triglyceride derivatives to give alkyl ester polyols having 1-12 carbon atoms in the alkyl radical. Particularly suitable crystalline or semicrystalline polyester polyols include adipic acid/hexanediol polyester and dodecanedicarboxylic acid/hexanediol polyesters.

Preferred polyester polyols may further include copolymers with polyether polyols. These types of polyester polyols have the advantage of excellent compatibility with the polyether polyols described below.

Suitable polyester polyols are commercially available, for example, under the trade name of Dynacol^{®} (from Evonik) and Stepanpol^{®} (from Stepan).

Particularly suitable polyether polyols include polyoxyalkylenepolyols. These are products of the polymeriziation of ethylene oxide, 1,2-propylene oxide, 1,2- or 2,3-butylene oxide, oxetane, tetrahydrofuran or mixtures thereof, optionally polymerized using a starter molecule with two or more active hydrogen atoms, such as water, ammonia or compounds with several OH- or NH-groups, such as 1,2-ethanediol, 1,2- and 1,3-propanediol, neopentylglycol, diethyleneglycol, triethyleneglycol, the isomeric dipropylene-glycols and tripropyleneglycols, the isomeric butanediols, pentanediols, hexanediols, heptanediols, octanediols, nonanediols, decanediols, undecanediols, 1,3- and 1,4-cyclohexanedimethanol, bisphenol A, hydrogenated bisphenol A, 1,1,1-trimethylolethane, 1,1,1-trimethylolpropane, glycerol, aniline, as well as mixtures of the above-mentioned compounds.

Preferred are both polyoxyalkylenepolyols with a low degree of unsaturation (measured according to ASTM D-2849-69 and indicated in milliequivalents of unsaturation per gram of polyol (meq/g)), obtainable, for example, by using so-called double metal cyanide complex catalysts (DMC catalysts), and polyoxy-alkylenepolyols with a higher degree of unsaturation, obtainable, for example, by using anionic catalysts such as NaOH, KOH, CsOH or alkali alcoholates. Particularly preferred polyoxyalkylenepolyols are polymerization products of ethylene oxide and/or propylene oxide.

Particularly suitable polyether polyols include polyoxyalkylene diols and poly-oxyalkylene triols, especially polyoxyethylene diols and triols and polyoxypropylene diols and triols, preferably having a number average molecular weight (Mₙ) in the range of 400 - 15000 g/mol, especially 500 - 10000 g/mol.

Likewise particularly suitable polyether polyols are what are known as ethylene oxide-terminated ("EO-endcapped", ethylene oxide-endcapped) polyoxypropylene polyols. The latter are special polyoxypropylene polyoxyethylene polyols that are obtained for example when pure polyoxypropylene polyols, especially polyoxypropylene diols and triols, are at the end of the polypropoxylation reaction further alkoxylated with ethylene oxide and thus have primary hydroxyl groups. Preference in this case is given to polyoxypropylene polyoxyethylene diols and polyoxypropylene polyoxyethylene triols.

Furthermore likewise, particularly suitable polyether polyols include polytetramethylene glycol (PTMG, poly-THF), which is produced, for example, by ring-opening polymerization of tetrahydrofuran. This type of polyether polyol generally has crystalline properties that may make it especially suitable for use as a polyol component in reactive hot-melt adhesives, for example, due to excellent mechanical properties compared to some other polyether polyols.

Suitable polyether polyols are commercially available, for example, under the trade name of Acclaim^{®}, Desmophene^{®}, and Arcol^{®} (all from Covestro); under the trade name of Voranol^{®} (from Dow); under the trade name of Excenol^{®}, and Preminol^{®} (all from AGC); under the trade name of Velvetol^{®} (from Allessa); under the trade name of PTMG^{®}, under the trade name of Caradol^{®} (from Shell Chemicals); and under the trade name of Dianol^{®} (from Arkema).

Further suitable polyols **PO** are polycarbonate polyols, particularly products of the polycondensation of dialkyl carbonates, diaryl carbonates or phosgene with diols or triols such as ethylene glycol, diethylene glycol, pro-pylene glycol, dipropylene glycol, neopentyl glycol, 1,4-butanediol, 1,5-pen-tanediol, 3-methyl-1,5-hexanediol, 1,6-hexanediol, 1,8-octanediol, 1,10-de-canediol, 1,12-dodecanediol, 1,12-octadecanediol, 1,4-cyclohexane dimetha-nol, dimeric fatty acid diol (dimeryl diol), hydroxypivalic neopentylglycol ester, glycerol and 1,1,1-trimethylolpropane.

Suitable polycarbonate polyols may also include polyether units (polyether-polycarbonate polyols), for example, to promote compatibility with the polyether polyols mentioned above. These types of polyether polyols may also work as a compatibilizer between the above-mentioned polyester polyols and polyether polyols. Particularly, use of polyether-polycarbonate polyols may be preferred since they can be, for example, often be used to improve adhesion properties of hot-melt adhesives, particularly to the polar substrates, such as metals, which improvement cannot be achieved using other types of polyols, particularly with crystalline polyester polyols or polyether polyols. Suitable polyether polycarbonate polyols may be produced by the reaction of carbon dioxide and epoxide in the presence of a catalyst. Such reaction route may be preferred from environmental point of view since it consumes carbon dioxide and the production of polyether polycarbonate polyols has, therefore, a potential to reduce amount of atmospheric CO₂.

Along with the above-mentioned polyols, small amounts of low molecular weight divalent or multivalent alcohols can be used, such as 1,2-ethanediol, 1,2-propanediol, neopentyl glycol, dibromoneopentyl glycol, diethylene glycol, triethylene glycol, the isomeric dipropylene glycols and tripropylene glycols, the isomeric butanediols, pentanediols, hexanediols, heptanediols, octanediols, no-nanediols, decanediols, undecanediols, 1,3- and 1,4-cyclohexanedimethanol, hydrogenated bisphenol A, dimer fatty alcohols, 1,1,1-trimethylolethane, 1,1,1-trimethylolpropane, glycerol, pentaerythritol, sugar alcohols, such as xylitol, sorbitol or mannitol, sugars, such as saccharose, other polyhydric alcohols, low molecular weight alkoxylation products of the above-mentioned divalent or multivalent alcohols, as well as mixtures of the above-mentioned alcohols.

In embodiments, the polyol tri-or higher-functional polyol **PO1** is a polyether polyol, preferably having a hydroxyl number of 150 - 850 mg KOH/g, preferably 250 - 750 mg KOH/g and/or a number average molecular weight (Mₙ) in the range of 150 - 10000 g/mol, preferably 150 - 5000 g/mol.

In embodiments, the first component **A** further comprises at least one di- or tri-functional polyol **PO2,** preferably a polyether polyol or a polyester polyol, that is different from the polyether polyol **PO1.**

In embodiments, the di- or tri-functional polyol **PO2** has a hydroxyl number of 15 - 100 mg KOH/g, preferably 25 - 75 mg KOH/g and/or a number average molecular weight (Mₙ) in the range of 150 - 10000 g/mol, preferably 150 - 5000 g/mol.

In embodiments, the sum of the proportions of the polyol **PO1** and **PO2** make up 15 - 60 wt.-%, preferably 25 - 55 wt.-%, more preferably 35 - 50 wt.-% of the total weight of the first component **A.**

Suitable polyisocyanates **PI** for use in the curable polyurethane composition include, for example, monomeric aliphatic, cyclo-aliphatic, and aromatic di- and triisocyanates as well as oligomers and derivatives of the these.

The term "monomeric polyisocyanate" refers in the present disclosure to an organic compound with two or more isocyanate groups that are separated by a divalent hydrocarbon radical. Particularly, a monomeric polyisocyanate contains no urethane groups and oligomers or polymer products of polyisocyanate monomers, such as adducts of monomeric polyisocyanates, are not considered to be "monomeric polyisocyanates" in the context of the present invention.

Furthermore, the term "oligomer" designates a compound built up through the linkage of a few monomers, for example dimers, trimers, tetramers and other polymeric materials. Term "polyisocyanate oligomer" can designate an individual oligomer or a mixture of oligomers of monomeric polyisocyanates, particularly monomeric diisocyanates, wherein these oligomers can be built up of like or different monomeric polyisocyanates.

Examples of suitable monomeric diisocyanates include aliphatic and aromatic monomeric diisocyanates, for example, 1,6-hexamethylene diisocyanate (HDI), 2-methylpentamethylene 1,5-diisocyanate, 2,2,4- and 2,4,4-trimethyl-1,6-hexamethylene diisocyanate (TMDI) and mixtures of these isomers, 1,10 decamethylene diisocyanate, 1,12-dodecamethylene diisocyanate, lysine diisocyanate, lysine ester diisocyanate, cyclohexane 1,3-diisocyanate and cyclohexane 1,4-diisocyanate and mixtures of these isomers, 1-methyl-2,4- and -2,6-diisocyanatocyclohexane and mixtures of these isomers (HTDI or H6TDI), 1-isocyanato-3,3,5-trimethyl-5-isocyanatomethylcyclohexane (= isophoronediisocyanate or IPDI), perhydro-2,4'- and -4,4'-diphenylmethane diisocyanate (HMDI or H12MDI) and mixtures of these isomers, 1,4- diisocyanato-2,2,6-trimethylcyclohexane (TMCDI), 1,3- and 1,4-bis(isocyanato-methyl)cyclohexane, m- and p-xylylene diisocyanate (m- and p-XDI) and mixtures of these isomers, m- and p-tetramethyl-1,3- and 1,4-xylylene diisocyanate (m- and p-TMXDI) and mixtures of these isomers, bis(1-isocyanato-1-methylethyl)naphthalene, 2,4- and 2,6-tolylene diisocyanate and mixtures of these isomers (TDI), 4,4'-diphenylmethane diisocyanate, optionally with proportions of 2,4'- and/or 2,2'-diphenylmethane diisocyanate (MDI), 1,3- and 1,4-phenylene diisocyanate (PDI) and mixtures of these isomers, naphthalene 1,5-diisocyanate (NDI), 3,3'-dimethyl-4,4'-diisocyanatobiphenyl (TODI), and dianisidine diisocyanate (DADI). Furthermore, a person skilled in the art knows that the technical grade products of diisocyanates may frequently contain isomer mixtures or other isomers as impurities.

Suitable aliphatic and aromatic monomeric diisocyanates are commercially available, for example, under the trade names of Lupranat^{®} (from BASF), Desmodur (from Covestro), Cosmonate^{®} (from Mitsui Chemical), Millionate^{®} (from Tosoh), Wannate^{®} (from Wanhua chemical), and Duranate^{®} (from Asahi Kasei).

Further suitable polyisocyanates **PI** include oligomers, polymers, and derivatives of monomeric polyisocyanates containing isocyanurate, iminooxadiazindione, biuret, allophanate, carbodiimide, uretonimine or oxadiazine-trione groups, preferably having an average isocyanate-functionality determined according to ISO 14896-2009 standard method A in the range of 1.2 - 3, especially 1.3 - 2.7, particularly 1.5 - 2.5.

Especially suitable oligomers, polymers, and derivatives of monomeric polyisocyanates include those based on MDI, TDI, HDI, and IPDI.

Commercially available versions of these include, for example, HDI-Biurete such as Desmodur^{®} N 100 and N 3200 (from Covestro), Tolonate^{®} HDB and HDB-LV (from Rhodia) and Duranate^{®} 24A-100 (from Asahi Kasei); HDI-Isocyanurate, such as Desmodur^{®} N 3300, ultra N 3300, N 3600, ultra N 3600 and N 3790 BA (all from Covestro), Tolonate^{®} HDT, HDT-LV and HDT-LV2 (from Rhodia), Duranate^{®} TPA-100 and THA-100 (from Asahi Kasei) and Coronate^{®} HX (von Nippon Polyurethane); HDI-Uretdione such as Desmodur^{®} N 3400 (von Covestro); HDI-Iminooxadiazindione such as Desmodur^{®} XP 2410 (von Covestro); HDI-Allophanate such as Desmodur^{®} VP LS 2102 (from Covestro); IPDI-Isocyanurate, for example as a solution such as Desmodur^{®} Z 4470 (from Covestro) or in solid form such as Vestanat^{®} T1890/ 100 (from Evonik Degussa); TDI-Oligomers such as Desmodur^{®} IL (from Covestro); as well as mixtures of isocyanurates based on TDI/HDI, for example Desmodur^{®} HL (von Covestro). Furthermore suitable are at standard room temperature liquid forms of MDI ("modified MDI"), which are mixtures of MDI with MDI derivatives, such as MDI-carbodiimides or MDI-uretonimines or MDI-urethanes that are commercially available under the trade names of Desmodur^{®} CD, Desmodur^{®} PF, Desmodur^{®} PC (all from Covestro) or Isonate^{®} M 143 (from Dow Chemicals), as well as mixtures of MDI and MDI-homologen (polymers of MDI or PMDI), which are commercially available unter the trade name of Desmodur^{®} VL, Desmodur^{®} VL50, Desmodur^{®} VL R10, Desmodur^{®} VL R20, Desmodur^{®} VH 20 N and Desmodur^{®} VKS 20F (all from Covestro), Isonate^{®} M 309, Voranate^{®} M 229 and Voranate^{®} M 580 (all from Dow Chemicals) or Lupranat^{®} M 10 R (from BASF). The oligomeric polyisocyanates discussed above are typically mixtures of substances having different degrees of oligomerization/polymerization and/or chemical structures and have an average isocyanate functionality in the range of 2.1 - 4.0.

In embodiments, the polyisocyanate **PI** is selected from monomeric di- and triisocyanates and oligomers of these, preferably having an isocyanate (NCO) content determined according to ISO 11909:2007 standard of 15 - 45 wt.-%, more preferably 20 - 40 wt.-%. The term "isocyanate content" as used herein is understood to mean the weight percentage of isocyanate groups to the total weight of the polyisocyanate **PI.**

The components **A** and **B** are preferably formulated in terms of the amounts of the polyisocyanate **PI,** catalyst **CAT** and the compound **T** in such a way that the mixed curable composition retains good shapability for a few seconds to a few minutes.

If the compound **T** is dosed excessively, the mixed curable polyurethane composition applied in layers only attains the necessary strength at a late stage, so that a further layer can be applied thereto. As a result the printing speed has to be significantly reduced, or it is necessary to include wait times, which delays the completion of the shaped body.

In embodiments, the molar ratio of all the thiol groups in the at least one compound **T** to all metal atoms in the at least one metal catalyst **CAT** is between 1:1 and 250:1, preferably between 2:1 and 150:1, more preferably between 5:1 and 100:1.

This quantitative ratio allows the pot life of the curable polyurethane composition to be adjusted, specifically within the intrinsic limits of the particular composition through, for example, the content of catalyst, the reactivity of the isocyanates present, and the amount thereof. The lower limit of the pot life is the pot life that is obtained in a given composition when using a defined amount of catalyst without addition of compound **T.**

It is generally possible to set the pot life very accurately by adjusting the amount and type of the constituents, particularly of the polyisocyanate **PI,** compound **T,** and the metal catalyst **CAT,** and hence to optimize it for a given 3D printing system. It is possible to set pot lives of less than one minute up to a few hours. The upper limit of the adjustable pot life is accordingly the pot life that would be achieved through the uncatalyzed isocyanate-hydroxyl reaction without using any catalyst. Even without the use of a catalyst, this reaction will commence at some point after mixing the two components **A** and **B.** However, the reaction without catalyst proceeds more slowly and with the development of poorer mechanical properties in the cured polyurethane composition.

The metal catalyst **CAT** can be provided in one of the components **A** and **B** or in a third component **C,** which is mixed with the components **A** and **B** in the mixer to give the curable polyurethane composition.

It may be preferable that the metal catalyst **CAT** is present only in the first component **A** or in a third component **C.** This may have the advantage of achieving better storage stability for the multiple-component polyurethane composition.

Preferably, the at least one thiol compound **T** contains on average 1 - 5, more preferably 2 - 4 thiol groups per molecule.

In embodiments, the at least one thiol compound **T** is selected from ethylene glycol di(3-mercaptopropionate), ethylene glycol di(2-mercaptoacetate), trimethylolpropane tri(3-mercaptopropionate), trimethylolpropane tri(2-mercaptoacetate), pentaerythritol tetra(3-mercaptopropionate), pentaerythritol tetra(2-mercaptoacetate), dipentaerythritol hexa(3-mercaptopropionate), dipentaerythritol hexa(2-mercaptoacetate), 2,3-dimercapto-1,3,4-thiadiazole, and 3,6-dioxa-1,8-octanedithiol.

Examples of suitable metal catalysts **CAT** include bismuth, zinc, tin, and zirconium compounds, including complexes and salts of these metals.

In embodiments, the metal catalyst **CAT** is selected from bismuth compounds, tin compounds, and zirconium compounds.

Especially suitable bismuth compounds include bismuth(III) compounds, such as bismuth carboxylates, for example bismuth acetate, oleate, octoate or neodecanoate, bismuth nitrate, bismuth halides such as the bromide, chloride, or iodide, bismuth sulfide, basic bismuth carboxylates such as bismuthyl neodecanoate, bismuth subgallate or bismuth subsalicylate, and mixtures thereof. Particularly preferred bismuth compounds are the bismuth carboxylates, particularly bismuth neodecanoate.

Particularly preferred tin compounds include organotin compounds, especially organotin(IV) compounds, preferably selected from dibutyltin diacetate, dibutyltin dilaurate, dibutyltin dichloride, dibutyltin diacetylacetonate, dimethyltin dilaurate, dioctyltin diacetate, dioctyltin dilaurate, dioctyltin diacetylacetonate, bis[(2-ethyl-1-oxohexyl)oxy]dioctylstannane, bis(neodecanoyloxy)dioctylstannane, bis(dodecylthio)dioctylstannane, and bis(dodecylthio)dimethylstannane.

In exemplary embodiments, the metal catalyst **CAT** is a bismuth(III) complex containing at least one ligand based on 8-hydroxyquinoline or a bismuth(III) complex containing at least one ligand based on a 1,3-ketoamide.

Examples of a bismuth(III) complex containing at least one ligand based on 8-hydroxyquinoline are described in EP 1551895 A1. Such compound is preferably a bismuth(III) carboxylate containing one molar equivalent of an 8-hydroxyquinoline ligand.

Examples of bismuth(III) complex containing at least one ligand based on a 1,3-ketoamide are described in EP 2791153. Such compound is preferably a bismuth(III) carboxylate containing 1 to 3 molar equivalents of a 1,3-ketoamide ligand.

The curable polyurethane composition may further comprise at least one further filler **F,** which is different from the light-weight filler **LF,** particularly having a significantly higher an apparent density than the light-weight filler **LF.** In embodiments, the further filler **F** has an apparent density determined by gas displacement pycnometer according to ISO 12154:2014 standard of at least 1.0 g/cm³, preferably at least 1.5 g/cm³.

Suitable further fillers **F** include inorganic fillers, such as, particularly,
natural, ground or precipitated calcium carbonate, which are optionally coated with fatty acids, particularly with stearic acid, barite, talc, quartz flour, quartz sand, dolomites, wollastonite, kaolin, calcined kaolin, mica (potassium aluminum silicate), aluminum oxide, aluminum hydroxide, magnesium hydroxide, silicic acids including highly dispersed silicas from pyrolysis processes, industrially produced carbon blacks, graphite, metal powders such as aluminum, copper, iron, silver or steel.

If the curable polyurethane composition contains at least one such further filler **F,** this may preferably be selected from the group consisting of calcium carbonate, carbon black, kaolin, barite, talc, quartz powder, dolomite, wollastonite, kaolin, calcined kaolin and mica.

In exemplary embodiments, the curable polyurethane composition contains at least one further filler **F** selected from ground and precipitated calcium carbonate, and calcined kaolin.

The further filler **F,** if used, may be present in the curable polyurethane composition in a proportion of 0.5 - 20 wt.-%, preferably 1.5 - 15 wt.-%, more preferably 2.5 - 10 wt.-%.

The curable polyurethane composition may still contain further constituents and additives, such as solvents, plasticizers and/or extenders, pigments, rheology modifiers waxes, drying agents, such as zeolites or molecular sieves, adhesion promoters such as, in particular, organofunctional trialkoxysilanes, stabilizers against oxidation, heat, light and UV radiation, flame-retardants, such as hydroxides or hydrates, in particular hydroxides or hydrates of aluminum or magnesium, especially aluminum trihydrate (ATH) or magnesium hydroxide (MDH), and surface-active substances, in particular as wetting agents and defoamers.

In embodiments, the curable polyurethane composition further comprises at least one rheology modifier **RM,** preferably fumed silica, more preferably surface modified fumed silica, particularly hydrophobic fumed silica.

The curable polyurethane composition may comprise 1.5 - 25 wt.-%, preferably 2.5 - 20 wt.-%, more preferably 5-20 wt.-% of the rheology modifier **RM,** preferably fumed silica, more preferably surface modified fumed silica, particularly hydrophobic fumed silica.

The curable polyurethane composition may further comprise at least one plasticizer **PL,** preferably selected from adipic acid based plasticizers such as doctyladipate (or bis(2-ethylhexyl)hexanedioate), phthalate based plasticizers such as di-isononyle phthalate, silicon oil, and hydrocarbon plasticizers.

Suitable hydrocarbon plasticizers are commercially available, for example, from Exxon Mobil under the trade name of Isopar^{®}.

In embodiments, the curable polyurethane composition comprises at least one adipic acid based plasticizer **PL1** and at least one hydrocarbon plasticizer **PL2,** wherein the weight ratio of the plasticizers **PL1** and **PL2** is in the range of 7:1 to 1:1, preferably 5:1 to 1:1, more preferably 4:1 to 2:1.

The method according to the present invention is an additive manufacturing process, particularly a generative free space process, where a curable polyurethane composition obtained by mixing of the first and second components **A** and **B** with each other is applied layer-by-layer using a print head of an additive manufacturing device, particularly a 3D printer, to form a shaped body from a cured polyurethane composition.

The height of a single layer, typically measured in a direction essentially perpendicular to the planes formed by single layers, especially in vertical direction, is preferably 0.5 mm to 20 mm, more preferably 3 mm to 15 mm, such as 3 mm to 10 mm.

The printhead of the additive manufacturing device is preferably movable in one, especially two or three spatial directions. Particular preference is given to a printhead movable in three spatial directions. This allows to produce shaped bodies of virtually any shape in a particularly simple manner.

The movement of the printhead can especially be achieved by mounting the printhead on a conventional robot arm movable in one, two or three spatial directions. The additive manufacturing device can be of any type, such as a robotic arm or a 3-axis gantry robot system.

Component **A** and component **B** and optionally further additives can be conveyed to the mixer, for example, via one or more conveying devices, especially pumps and conveying conduits. The conveying devices are especially controllable by means of a control unit, particularly independently of one another.

In embodiments, the components **A** and **B,** and optionally **C,** are conveyed via separate supply lines to the mixer.

In embodiments, the two components **A** and **B** each have a viscosity, measured at 20° C on a plate-plate viscometer with plate separation 1 mm and plate diameter 25 mm at a shear rate of 10 s⁻¹ of not more than 8000 Pa s, preferably not more than 5000 Pa s, more preferably not more than 2500 Pa ·s, even more preferably not more than 500 Pa ·s.

The two components **A** and **B** are produced separately and preferably with the exclusion of moisture. The components of the curable polyurethane composition are typically each stored in a separate container or in a separate compartment of a container.

The further constituents of the polyurethane composition may be present as a constituent of the first or second component, with further constituents that are reactive toward isocyanate groups preferably being a constituent of the first component **A.** A suitable container for storage of the respective component is especially a vat, a hobbock, a bag, a bucket, a can, a cartridge or a tube.

The components are both storage-stable, meaning that they can be stored prior to use for several months up to one year or longer, without any change in their respective properties to a degree of relevance to their use. The two components are stored separately from one another prior to the mixing of the composition and are only mixed with one another on or immediately prior to use. They are advantageously present in a package consisting of two separate chambers. The mixing upstream of or within the 3D printer in the method of the invention is typically effected by means of static mixers or with the aid of dynamic mixers. In the mixing, it should be ensured that the two components are mixed with maximum homogeneity. If the two components are mixed incompletely, local deviations from the advantageous mixing ratio will occur, which can result in a deterioration in the mechanical properties.

The mixer used for mixing of the components of the curable polyurethane composition with each other can be a static or dynamic mixer or a combination of these. Furthermore, the mixer is preferably mounted on the print head of an additive manufacturing device. The printhead preferably has a discharge nozzle for the layer-by-layer application of the curable polyurethane composition.

The discharge nozzle shapes the material discharged at the discharge opening. The shape of the discharge nozzle is not particularly restricted. The discharge nozzle may have a rectangular, square or a round shape. The diameter of the discharge nozzle is likewise not particularly restricted. In the case of very small diameters and simultaneously high viscosity of the composition, higher pressures are needed for extrusion. It has been found to be advantageous to use nozzles having exit openings having diameters of 0.5 mm to 100 mm, preferably 2 mm to 50 mm, especially 5 mm to 30 mm. There may also be further shaping elements mounted in the discharge nozzle.

In further embodiments, the discharge opening may also be larger, up to a several centimeters. This allows the application of large beads or layers of the curable polyurethane composition, where these beads or layers may have thicknesses or diameters of several centimeters or more. The polyurethane composition used in the inventive method, even in large layers or volumes, cures homogeneously and rapidly.

In embodiments, the mixer is mounted on the printhead directly on this discharge nozzle. This allows additional control of the evolution of strength of the curable polyurethane composition over time.

The printhead especially has at least one discharge opening which may be identical to the outlet of the mixer through which the curable polyurethane composition can be discharged.

The dwell (residence) time of the curable polyurethane composition that is to be mixed or has been mixed in the mixer is preferably less than 30 s, more preferably less than 20 s, especially preferably less than 15 s.

The average dwell time of the polyurethane composition in the mixer is the average period for which a particle dwells in the mixer, from inlet to outlet. The curable polyurethane composition obtained immediately after mixing of component **A** with component **B,** has good deformability and can be applied in homogeneous layers with the printhead. The curable composition may be applied here in one or more layers. These layers are self-supporting immediately or after no later than a short time and show a rapid evolution of strength. Subsequent layers can therefore be applied without difficulty to the layers beneath at short intervals and in a height of less than one millimeter up to several centimeters.

Another aspect of the present invention is use of the shaped body or the three-dimensional object as a mold for casting of a cementitious composition, preferably a concrete composition.

In embodiments, the use comprises:
- using the method as explained above to produce a shaped body or a three dimensional object,
- filling the inside volume of the three dimensional object with a cementitious composition,
- letting the cementitious composition to cure to obtain a at least partially cured cementitious body, and
- removing the three-dimensional object from the at least partially cured cementitious body.

### Examples

The following materials in Table 1 were used in the examples.

| | | |
|---|---|---|
| Voranol^{®} CP 260 | Trifunctional polyether polyol, hydroxyl number 647-676 mg KOH/g, average molecular weight 260 g/mol | Dow Chemical |
| Voranol^{®} CP 450 | Trifunctional polyether polyol, hydroxyl number 370-396 mg KOH/g, average molecular weight 450 g/mol | Dow Chemical |
| Voranol^{®} CP 4755 | Trifunctional polyether polyol, hydroxyl number 32-37 mg KOH/g, average molecular weight 4800 g/mol | Dow Chemical |
| Desmophen^{®} 21BD12 | Bifunctional polyether polyol, hydroxyl number 26-30 mg KOH/g | Covestro |
| Polyol 4525 | Tetrafunctional with secondary hydroxyl groups, hydroxyl number 525 mg KOH/g | Perstorp |
| Plastomoll^{®} DOA | Bis(2-ethylhexyl)hexanedioate | BASF |
| Isopar^{®} M | Hydrocarbon oil plasticizer | Exxon Mobil |
| Omya^{®} BL | Ultra fine calcium carbonate | Omya |
| Thiocure^{®} GDMP | Glycol di(3-mercaptopropionate) | Bruno Bock Thiochemicals |
| 3M^{®} glass bubbles K25 | Hollow glass spheres, true density 0.25 g/cm³, d₅₀ median size 55 µm | 3M |
| Q-CEL^{®} 5028K | Hollow glass spheres, true density 0.25 g/cm³, average size 75 µm | Potters Europe |
| Coscat^{®} 83 | Organobismuth catalyst | Vertellus Specialties |
| Cab-O-SIL^{®} 720 | Hydrophobic fumed silica | Cabot |
| Desmodur^{®} 44 V 20 L NP | Polymeric isocyanate based on diphenylmethane-4,4'-diisocyanate, NCO content 30.5 - 32.5 wt.-% | Covestro |
| Siliporite^{®} 1720 | Synthetic zeolite type A of crystalline structure in Potassium-Sodium Aluminosilicate form | Arkema |

### Preparation of components A and B

For each tested curable polyurethane composition, the ingredients shown in Table 2 below for component A were processed in the stated amounts by means of a vacuum butterfly mixer with exclusion of moisture to form a homogeneous paste. The ingredients of the second component B indicated in Table 2 were processed in the same manner. The two components were each filled into a screw-driven twin cartridge dosing system or into hobbocks of a Graco Exactablend AGP 1:1 pumping system, which were used as an integrated dosage system in the subsequent 3D printing process.

### 3D printing test with composition of Ex-1

In the printing tests, a 3D printer comprising a static mixer with a length of 17.4 cm and a print head arranged on a standard UR5e Universal Robot (or KUKA KR60) was used. The inlet of the static mixer was connected to a dosing system (either the twin cartridge or the Graco AGP 1:1 system) and the outlet of the static mixer was connected to the print head having a circular outlet opening with an inner diameter (ID) of 6 mm and an outer diameter (OD) of 8 mm.

In a first printing test, a smaller cylindrical hollow object having a height of 35 cm, a wall thickness of 5 mm, and a diameter of 4.5 cm was prepared using the 3D printer connected to the twin cartridge dosing system. In the 3D printing process, the components A and B were squeezed out from the twin cartridge dosing system and mixed at the volume ratio of 1:1 and at a total flow rate of 0.03 kg/min. The residence time of the material in the static mixer and in the print head/nozzle in total was about 1.5 minutes. The cylindrical hollow object was prepared by applying the mixed composition using the movable print head in a layer-by-layer manner. The printing time in the first printing test was 21 minutes.

In a second printing test, a larger hollow rectangular object having a height of 0.1 m, a length of 1.1 m, a width of 0.4 m, and a wall thickness of 0.4 cm was prepared using the 3D printer connected to the Graco Exactablend AGP 1:1 dosing system. In the 3D printing process, the components A and B were mixed at the volume ratio of 1:1 and at a total flow rate of 0.4 kg/min. The residence time of the material in the static mixer and in the print head/nozzle in total was about 15-25 seconds and the printing time was 15 minutes.

In both printing tests, it was observed that the mixed composition of A and B applied using the print head was thixotropically and dimensionally stable enabling 3D printing of 3D objects using high printing speeds. Furthermore, the curing behavior of the mixed composition was such that the curing of a previous layer was not completed or even not yet started when the subsequent layer was already applied on top of it. This allowed good bonding between the successive layers. About 10 minutes after the application of the last layer, the 3D printed articles turned rigid and formed a dry skin.

### Preparation of 2-layer molded objects

Rectangular 2-layer molded objects were prepared using the twin cartridge dosing system and the exemplary two-component compositions of A and B as shown in Table 2 (Ex-1 to Ex-7).

In the preparation process, the components A and B mixed at the volume ratio of 1:1 and at a total flow rate of 0.03 kg/min and residence time of the composition in the static mixer was 1.5 minutes.

Two consecutive layers of the mixed composition were applied into a silicone mold having the dimensions of 150 mm x 15mm x 20 mm (length, width, thickness) using an interlayer time of one minute. The obtained 2-layer objects were used in the measurement of densities.

### Density of cured compositions

Densities of the cured materials of the 3D printed objects and the 2-layer molded objects were determined according to the following procedure.

A rectangular sample having dimensions of 1.5 cm x 2 cm x 3 cm was obtained by cutting a piece of the prepared objects and the density of the sample was measured using a water immersion method according to ISO 1183-1:2019 standard.

The results of the density measurements are shown in Table 2.

**Table 2**

| Compositions [wt.-%] | **Ref-1** | **Ex-1** | **Ex-2** | **Ex-3** | **Ex-4** | **Ex-5** |
|---|---|---|---|---|---|---|
| **Component A** | | | | | | |
| Voranol CP 260 | 20.67 | 14.75 | 22.25 | 16.07 | 22.25 | 0.00 |
| Voranol CP 450 | 19.06 | 16.00 | 17.75 | 20.53 | 17.00 | 0.00 |
| Voranol CP 4755 | 0.00 | 0.00 | 0.00 | 0.00 | 11.35 | 0.00 |
| Desmophen 21BD12 | 12.92 | 10.00 | 10.60 | 0.00 | 0.00 | 10.00 |
| Polyol 4525 | 12.73 | 9.85 | 0.00 | 10.11 | 0.00 | 40.60 |
| PLASTOMOLL DOA | 12.92 | 10.00 | 10.00 | 10.27 | 10.00 | 10.00 |
| ISOPAR*M | 9.69 | 7.50 | 7.50 | 10.27 | 7.50 | 7.50 |
| Defoamer | 0.00 | 0.20 | 0.20 | 0.21 | 0.20 | 0.20 |
| Omya BL | 0.00 | 5.30 | 5.40 | 5.54 | 5.40 | 5.40 |
| Thiocure GDMP | 0.65 | 0.50 | 0.50 | 0.51 | 0.50 | 0.50 |
| Microspheres K25 | 0.00 | 8.50 | 8.50 | 8.73 | 8.50 | 8.50 |
| Q-CEL 5028K | 0.00 | 6.70 | 6.70 | 6.88 | 6.70 | 6.70 |
| Coscat 83 | 1.55 | 1.20 | 1.20 | 1.23 | 1.20 | 1.20 |
| Cab-O-SIL 720 | 9.82 | 9.50 | 9.40 | 9.65 | 9.40 | 9.40 |
| Total | 100.00 | 100.00 | 100.00 | 100.00 | 100.00 | 100.00 |

| **Component B** | | | | | | |
|---|---|---|---|---|---|---|
| Desmodur 44 V20 L NP | 68.77 | 56.20 | 56.20 | 56.20 | 56.20 | 56.20 |
| PLASTOMOLL DOA | 21.72 | 16.90 | 16.90 | 16.90 | 16.90 | 16.50 |
| Defoamer | 0.51 | 0.40 | 0.40 | 0.40 | 0.40 | 0.40 |
| Siliporite 1720 | 0.00 | 6.50 | 6.50 | 6.50 | 6.50 | 6.50 |
| Microspheres K25 | 0.00 | 8.30 | 8.30 | 8.30 | 8.30 | 8.30 |
| Q-CEL 5028K | 0.00 | 6.60 | 6.60 | 6.60 | 6.60 | 6.60 |
| Cab-O-SIL 720 | 9.00 | 5.10 | 5.10 | 5.10 | 5.10 | 5.50 |
| Total | 100.00 | 100.00 | 100.00 | 100.00 | 100.00 | 100.00 |
| | | | | | | |
| Density of cured material | 1.39 | 0.747 | 0.748 | 0.735 | 0.735 | 0.742 |

## Claims

1. A method for producing a three-dimensional object comprising the steps of:
- providing a first component **A** comprising,
a1) at least one tri- or higher functional polyol **PO1** having a number average molecular weight (Mₙ) in the range of 150 - 15000 g/mol
a2) optionally at least one di- or tri-functional polyol **PO2** that is different from the polyol **PO1,** and
a3) at least one compound **T** having at least one thiol group,
- providing a second component **B** comprising:
b1) At least one polyisocyanate **PI,**
- mixing the first component **A** and the second component **B** with each other in a mixer to give a curable polyurethane composition, and
- applying the curable polyurethane composition layer-by-layer using a movable print head of an additive manufacturing device to prepare a shaped body from a cured polyurethane composition,
wherein the curable polyurethane composition further comprises at least one metal catalyst **CAT** for catalyzing the reaction of hydroxyl groups and isocyanate groups that is able to form thiol complexes, and
wherein the cured polyurethane composition has a density measured using the Method A as defined in ISO 1183-1:2019 standard of not more than 1.0 g/cm³, preferably not more than 0.9 g/cm³.

2. The method according to claim 1, wherein the curable polyurethane composition further comprises at least one light-weight filler **LF** having an apparent density determined by gas displacement pycnometer according to ISO 12154:2014 standard of not more than 0.6 g/cm³, preferably not more than 0.5 g/cm³.

3. The method according to claim 2, wherein the light-weight filler **LF** has a median particle size d₅₀ measured according to ISO 13320:2009 standard of not more than 1000 µm, preferably not more than 500 µm.

4. The method according to claim 2 or 3, wherein the light-weight filler **LF** is selected from hollow glass spheres, expanded glass spheres, hollow ceramic spheres, cenospheres, and hollow alumina beads, preferably from hollow glass spheres, expanded glass spheres, and cenospheres.

5. The method according to any one of claims 2-4, wherein the curable polyurethane composition comprises 1.5 - 25 wt.-%, preferably 5-20 wt.-% of the light weight filler **LF.**

6. The method according to any one of previous claims comprising a further step of subjecting at least a portion of a surface of the shaped body to a mechanical treatment step to reduce surface roughness.

7. The method according to any one of previous claims, wherein the shaped body is a hollow object having an inner and an outer surface, preferably having wall thickness of 1 - 50 mm, more preferably 2-40 mm and/or a total height of at least 50 cm, preferably at least 75 cm.

8. The method according to claim 7, wherein the method comprises a further step of subjecting at least a portion of the inner surface of the hollow object to a mechanical treatment step to reduce surface roughness, wherein the mechanical treatment step is conducted by using at least one of grinding, brushing, abrasive blasting, milling, threading, sawing or cutting means.

9. The method according to any one of previous claims, wherein the molar ratio of all isocyanate groups in the second component **B** to all hydroxyl groups in the first component **A** is in the range of 0.8 - 1.5, preferably 0.9 - 1.2.

10. The method according to any one of previous claims, wherein the polyisocyanate **PI** is selected from monomeric di- and triisocyanates and oligomers and derivatives thereof.

11. The method according to any one of previous claims, wherein the molar ratio of all thiol groups in the compound **T** to all metal atoms in the metal catalyst **CAT** is between 1:1 and 250:1, preferably between 2:1 and 150:1.

12. The method according to any one of previous claims, wherein the compound **T** contains on average 1 - 5, more preferably 2 - 4 thiol groups per molecule.

13. The method according to any one of previous claims, wherein the compound **T** is selected from the group consisting of ethylene glycol di(3-mercaptopropionate), ethylene glycol di(2-mercaptoacetate), trimethylolpropane tri(3-mercaptopropionate), trimethylolpropane tri(2-mercaptoacetate), pentaerythritol tetra(3-mercaptopropionate), pentaerythritol tetra(2-mercaptoacetate), dipentaerythritol hexa(3-mercaptopropionate), dipentaerythritol hexa(2-mercaptoacetate), 2,3-dimercapto-1,3,4-thiadiazole, and 3,6-dioxa-1,8-octanedithiol.

14. The method according to any one of previous claims, wherein the metal catalyst **CAT** is selected from bismuth compounds, tin compounds, and zirconium compounds.

15. Use of a shaped body or a three-dimensional object obtained by using the method according to any one of previous claims as a mold for casting of a cementitious composition, preferably a concrete composition.

16. Use according to claim 15 comprising:
- filling the inside volume of the shaped body or the three-dimensional object with a cementitious composition,
- letting the cementitious composition to cure to obtain a at least partially cured cementitious body, and
- removing the shaped body or the three-dimensional object from the at least partially cured cementitious body.
